# EUROPEAN PATENT APPLICATION

(11) **EP 3 062 277 A1**
(43) Date of publication of application: **31.08.2016**
(21) Application number: 15171896.2
(22) Date of filing: 12.06.2015
(51) Int. Cl.: G06Q 30/02

(54) **VIDEO TIME EXTRACTING SYSTEM AND EXTRACTING METHOD THEREOF**

(30) Priority: 26.02.2015 TW 104106422
(71) Applicant: Aircom Pacific Inc, San Jose, CA 95113 (US)
(72) Inventor: SHIH, Daniel, Dublin, CA California 94568 (US)
(74) Representative: Arpe Fernandez, Manuel de

(57) **Abstract**

A video time extracting system and an extracting method thereof are provided. The video time extracting system includes a display device and a cloud server. The display device includes a display screen and a first transceiver. The display screen plays video files. The first transceiver transmits data of advertisement time slots. The cloud server includes a database, a second transceiver and a processor. The database stores advertisement files. The second transceiver receives the data of the advertisement time slots. The processor selects the advertisement files played in the advertisement time slot. The display screen plays the advertisement files provided by the cloud server in the advertisement time slot.

## Description

### CROSS-REFERENCE TO RELATED APPLICATION

This application claims priority from Taiwan Patent Application No. 104106422, filed on February 26, 2015, in the Taiwan Intellectual Property Office, the contents of which are hereby incorporated by reference in their entirety for all purposes.

### BACKGROUND OF THE INVENTION

### 1. Field of the Invention

This application relates to a video time extracting system and an extracting method thereof, and more particularly, to a video time extracting system and an extracting method thereof which applies a display device to provide a cloud server with advertisement time slots, then the cloud server providing advertisement files corresponding to the advertisement time slots to the display device to play the advertisement files accordingly.

### 2. Description of the Related Art

Generally, advertisements may be played in the specific time slot when a display device is applied to play video file. However, the contents of the advertisement are played based on the advertiser's purpose.

The foregoing advertisements are played only when the video advertisement is playing or after playing, and the video file or the next video file keeps being played when the advertisement ends. The advertisement file, nonetheless, is not in connection with the played video file.

As far as the audiences are concerned, the video file, which has been watched for a period by the audiences, may be not related to the contents of the played advertisement, such that the advertisement is not able to impress to the audiences, and the advertisement is therefore of a little effect and echo.

### SUMMARY OF THE INVENTION

In view of the foregoing technical problems, the objective of the present invention provides a video time extracting system and an extracting method thereof to solve the to-be-improved technical problems.

According to one objective of the present invention, a video time extracting system is provided which may include a display device and a cloud server. The display device may be connected to a multimedia output device to obtain a plurality of video files, and may include a display screen and a first transceiver. The display screen playing the plurality of video files. Each pair of the plurality of video files having an advertisement time slot therebetween. The first transceiver may transmit data of the advertisement time slots. The cloud server may be connected to the display device, and may include a database, a second transceiver and a processor. The database storing a plurality of advertisement files. The second transceiver receiving the data of the advertisement time slots. The processor may connect the database with the second transceiver to obtain the advertisement time slots, and may select each of the advertisement files played in each of the advertisement time slots. The processor may control the second transceiver to transmit one of the advertisement files corresponding to one of the advertisement time slots in one of the advertisement time slots, and the display screen may play the advertisement file accordingly.

Preferably, the display device may obtain a plurality of original advertisement files from the multimedia output device, and each of the original advertisement files may be played in each of the advertisement time slots. One of the advertisement files corresponding to one of the advertisement time slots may cover one of the original advertisement files in one of the advertisement time slots, and the display screen may play the advertisement file accordingly.

Preferably, the processor may include a plurality of predetermined slots, each of the predetermined slots may correspond to each of the advertisement files, and the processor may compare the advertisement time slots with the plurality of predetermined slots. When one of the advertisement time slots matches one of the predetermined slots, the second transceiver may transmit one of the advertisement files corresponding to one of the predetermined slots to the display device, and the display screen may play the advertisement file in the predetermined slot accordingly.

Preferably, the cloud server may further include a timer providing the processor with a current point of time. The processor may include a plurality of predetermined points of time, each of the predetermined points of time may correspond to each of the advertisement files, and the processor may compare the current point of time with the plurality of the predetermined points of time. When the current point of time matches one of the predetermined points of time, the second transceiver may transmit one of the advertisement files corresponding to one of the predetermined points of time to the display device, and the display screen may play the advertisement file in the predetermined time point accordingly.

Preferably, an advertisement content of each of the advertisement files may correspond to a video content of each of the video files, and one of the advertisement files may be played in one of the advertisement time slots when one of the video files are playing or after playing.

According to another objective of the present invention, a video time extracting method is provided, which may include the following steps of: connecting a display device with a multimedia output device to obtain and play a plurality of video files, and transmitting data of advertisement time slots, each of the advertisement time slots is arranged between each pair of the video files; disposing a cloud server receiving and storing the data of the advertisement time slots from the display device; selecting each of the advertisement files played in each of the advertisement time slots; transmitting one of the advertisement files corresponding to one of the advertisement time slots in one of the advertisement time slots, and playing the advertisement file by the display device.

Preferably, the display device may obtain a plurality of original advertisement files from the multimedia output device, and each of the original advertisement files may be played in each of the advertisement time slots. One of the advertisement files corresponding to one of the advertisement time slots may cover one of the original advertisement files in one of the advertisement time slots, and the display screen may play the advertisement file accordingly.

Preferably, a processor of the cloud server may include a plurality of predetermined slots, and each of the predetermined slots may correspond to each of the advertisement files. The processor may include the following steps of: comparing the advertisement time slots with the plurality of predetermined slots; transmitting one of the advertisement files corresponding to one of the predetermined slots to the display device when one of the advertisement time slots matches one of the predetermined slots, and playing the advertisement file in the predetermined slot by the display device.

Preferably, the cloud server may include a timer and a processor. The timer may provide the processor with a current point of time, the processor may include a plurality of predetermined points of time, and each of the predetermined points of time may correspond to each of the advertisement files. The processor may include the following steps of: comparing the current point of time with the plurality of the predetermined points of time; transmitting one of the advertisement files corresponding to one of the predetermined points of time to the display device when the current point of time matches one of the predetermined points of time, and playing the advertisement file in the predetermined time point by the display device.

Preferably, an advertisement content of each of the advertisement files may correspond to a video content of one of the video files, and one of the advertisement files may be may played in one of the advertisement time slots when one of the video files is playing or after playing.

In conclusion, a video time extracting system and an extracting method thereof of the present invention may apply the display device to transmit the data of the advertisement time slots to the cloud server, and the cloud server may select the advertisement files corresponding to the advertisement time slot after receiving the data of the advertisement time slots, and may transmit the advertisement file to the display device. Afterwards, the display device may play the advertisement file in the advertisement time slot, such that the objective of playing the advertisement file corresponding to the advertisement time slot in the advertisement time slot can be achieved.

### BRIEF DESCRIPTION OF THE DRAWINGS

Hereinafter, embodiments of the present invention will be described in detail with reference to the accompanying drawings so that those skilled in the art to which the present invention pertains can realize the present invention, wherein:
FIG. 1 is the first block diagram of a video time extracting system of the present invention.
FIG. 2 is the second block diagram of a video time extracting system of the present invention.
FIG. 3 is the first flow chart of a video extracting method of the present invention.
FIG. 4 is the second flow chart of a video extracting method of the present invention.
FIG. 5 is the third flow chart of a video extracting method of the present invention.

### DETAILED DESCRIPTION OF THE PREFERRED EMBODIMENTS

Hereinafter, embodiments of the present invention will be described in detail with reference to the accompanying drawings so that those skilled in the art to which the present invention pertains can realize the present invention. As those skilled in the art would realize, the described embodiments may be modified in various different ways, all without departing from the spirit or scope of the present invention.

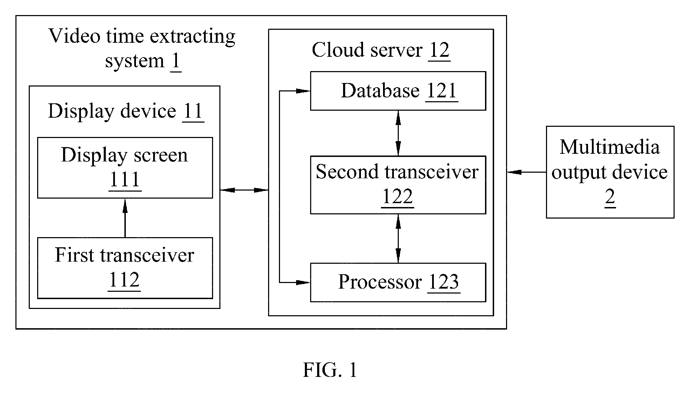

Please refer to FIG. 1 which is the first block diagram of a video time extracting system of the present invention. As shown in the Fig., a video time extracting system 1 includes a display device 11 and a cloud server 12. Here, the display device 11 may be a television, the other display devices having functions of playing video files and advertisement files, or the electronic devices having function of transmitting signals.

Besides, the display device 11 is connected to a multimedia output device 2 to obtain a plurality of video files, and playing the plurality of video files. The display device 11 includes a display screen 111 and a first transceiver 112. The display screen 111 is applied to play the plurality of video files, and each pair of the plurality of video files having an advertisement time slot therebetween. Each of the advertisement files is played in each of the advertisement time slots correspondingly. The first transceiver 112 transmits data of the advertisement time slots.

Moreover, the cloud server 12 is connected with the display device 11 to obtain the advertisement time slot. In addition, the cloud server 12 includes a database 121, a second transceiver 122 and a processor 123. The database 121 stores a plurality of advertisement files. The second transceiver 122 receives the data of the advertisement time slots transmitted by the first transceiver 112. The processor 123 is connected to the database 121 and the second transceiver 122 to obtain the advertisement time slots, and selects each of the advertisement files is played in each of the advertisement time slots. Therefore, the processor 123 controls the second transceiver 122 to transmit one of the advertisement files corresponding to one of the advertisement time slots in the one of the advertisement time slots, and the display screen 111 of the display device 11 plays the advertisement files in the advertisement time slot accordingly.

Practically, the display device 11 of the present invention obtains a plurality of original advertisement files from the multimedia output device 2. The original advertisement files are the advertisement files which are scheduled to be played in the advertisement time slots by the multimedia output device 2 when the video files end, and each of the original advertisement files is played in each of the advertisement time slots. However, one of the advertisement files corresponding to one of the advertisement time slots covers one of the original advertisement files in one of the advertisement time slots, and the display screen 111 plays the advertisement file accordingly.

According to foregoing description, when practically operating the video time extracting system 1 of the present invention, the cloud server 12 needs to obtain each advertisement time slot from the display device 11 in advance. Afterwards, the display device 11 controls the first transceiver 112 to transmit the data of the advertisement time slots to the cloud server 12, and the cloud server 12 also controls the second transceiver 122 to receive the data of the advertisement time slots.

When the cloud server 12 received the data of the advertisement time slots, the data of the advertisement time slots is further transmitted to the processor 123 of the cloud server 12, and then the processor 123 correspondingly selects one of the advertisement files according to the different advertisement time slots. The advertisement files are stored in the database 121 of the cloud server 12.

Besides, the processor 123 controls the second transceiver 122 to transmit one of the advertisement files corresponding to one of the advertisement time slots to the display device 11 when one of the advertisement time slots starts, such that the display screen 111 of the display device 11 plays the advertisement files corresponding to the advertisement time slot in the advertisement time slot.

It is noteworthy that the processor 123 may be able to select one of the advertisement files corresponding to one of the advertisement time slots, but not limited to only one. There may be a plurality of advertisement files correspond to one of the advertisement time slots. When one of the advertisement time slots starts, one of the advertisement files is played may be selected randomly from the plurality of advertisement files, but it shall be not limited thereto.

Furthermore, the processor 123 includes a plurality of predetermined slots, and each predetermined slot corresponds to each of the advertisement files. Namely, a certain advertisement files is scheduled to be played in a certain slot in advance, and the processor 123 compares the advertisement time slots with the plurality of the predetermined slots. When one of the advertisement time slots matches one of the predetermined slots, it means that the predetermined advertisement file needs to be played in one of the advertisement time slots. Furthermore, when one of the advertisement time slots starts, the processors 123 controls the second transceiver 122 to transmit one of the advertisement files corresponding to one of the predetermined time slot in one of the advertisement time slots, and the display screen 111 of the display device 11 plays the advertisement file in the predetermined time slot accordingly.

For example, when the predetermined time slot is set to start from 20:00 to 21:00 and the content of the advertisement file corresponding to the predetermined time slot is a bank advertisement, the processor 123 selects the advertisement time slot matching the predetermined time slot starting from 20:00 to 21:00 from the advertisement time slots. If an advertisement time slot starts from 20:25 to 20:30, the advertisement time slot naturally matches the predetermined time slot starting from 20:00 to 21:00. Hence, the processor 123 controls the second transceiver 122 to transmit the advertisement file corresponding to the predetermined time slot to the display device 11 at 20:25, and the display screen 111 plays the bank advertisement accordingly from 20:25 to 20:30. However, it shall be not limited thereto.

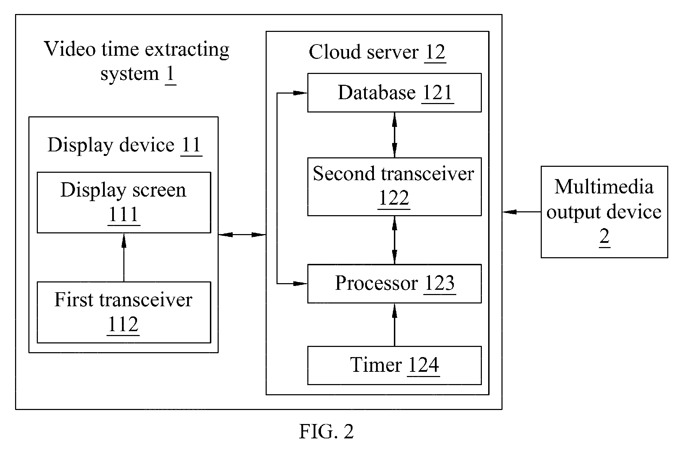

Please refer to FIG. 2 which is the second block diagram of a video time extracting system of the present invention. The difference between the embodiments of FIG. 1 and FIG. 2 lies in that the cloud server 12 further includes a timer 124. The timer 124 provides the processor 123 with a current point of time, and the current point of time may be a present time. The processor 123 includes a plurality of predetermined points of time, and the predetermined time point may be an exact time point or a period in which one of the video file is played. Each of the predetermined points of time corresponds to each of the advertisement files. That is, the advertisement file is set to be played at a time point in advance, and the processor 123 compares the received current point of time with the plurality of predetermined points of time. When the current point of time matches one of the plurality of predetermined points of time, the processor 123 controls the second transceiver 122 to transmit one of the advertisement files corresponding to one of the predetermined points of time to the display device, and the display screen 111 of the display device 11 plays the advertisement file at the predetermined time point accordingly. It is noteworthy that the video file will be stopped or covered by playing the advertisement file corresponding to the predetermined time point if the display screen 111 keeps playing the video file at the predetermined time point. On the contrary, the advertisement file corresponding to the predetermined time point is played in the advertisement time slot if the predetermined time point is set in the advertisement time slot which the video file ends.

For example, the predetermined time point is set at 20:25. As the content of the video file played at 20:25 is a bank scene, the content of the advertisement file corresponding to the predetermined time point is the bank advertisement. When the current point of time received by the processor 123 is 20:25, the current point of time matches the predetermined time point of 20:25. Hence, the processor 123 controls the second transceiver 122 to transmit the advertisement file corresponding to the predetermined time point to the display device 11. Afterwards, the display screen 111 stops or covers the video file which is playing, and the content of the advertisement file which is played at 20:25 is the bank advertisement. However, it shall be not limited thereto.

It is noteworthy that the foregoing advertisement content may correspond to the video content of one of the video files, and the advertisement file may be played in the advertisement time slot when the video file is playing or after playing.

Although the concept of a video extracting method of the present invention has been disclosed in the aforementioned processes of a video extracting system of the present invention. The following steps will be disclosed for more details.

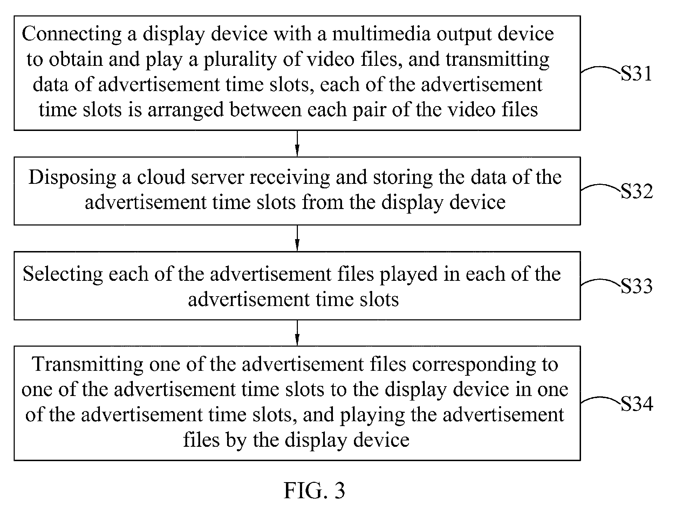

FIG. 3 is the first flow chart of a video extracting method of the present invention. As shown in the Fig., a video extracting method of the present invention includes the following steps.

Step S31: Connecting a display device with a multimedia output device to obtain and play a plurality of video files, and transmitting data of advertisement time slots, each of the advertisement time slots is arranged between each pair of the video files.

Step S32: Disposing a cloud server receiving and storing the data of the advertisement time slots from the display device.

Step S33: Selecting each of the advertisement files played in each of the advertisement time slots.

Step S34: Transmitting one of the advertisement files corresponding to one of the advertisement time slots to the display device in one of the advertisement time slots, and playing the advertisement files by the display device.

In the practice, the original advertisement files played in the advertisement time slots will be covered by the advertisement files corresponding to the advertisement time slots, and then the advertisement files corresponding to the advertisement time slots provided by the cloud server is played.

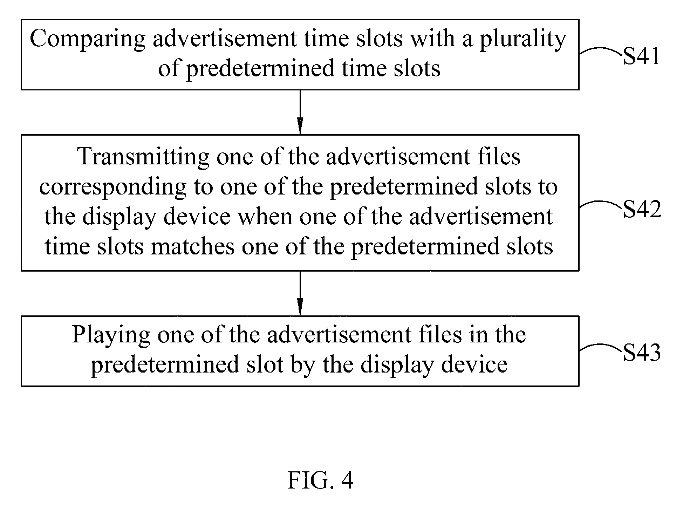

Please refer to FIG. 4 which is the second flow chart of a video extracting method of the present invention. As shown in the Fig., the processor of the cloud server includes a plurality of predetermined points of time, and each predetermined time point corresponds to each of the advertisement files. The processor includes performing the following steps.

Step S41: Comparing advertisement time slots with a plurality of predetermined time slots.

Step S42: Transmitting one of the advertisement files corresponding to one of the predetermined slots to the display device when one of the advertisement time slots matches one of the predetermined slots.

Step S43: Playing one of the advertisement files in the predetermined slot by the display device.

Therefore, the display screen of the display device plays the advertisement files corresponding to the predetermined slot in the advertisement time slot matching the predetermined slot.

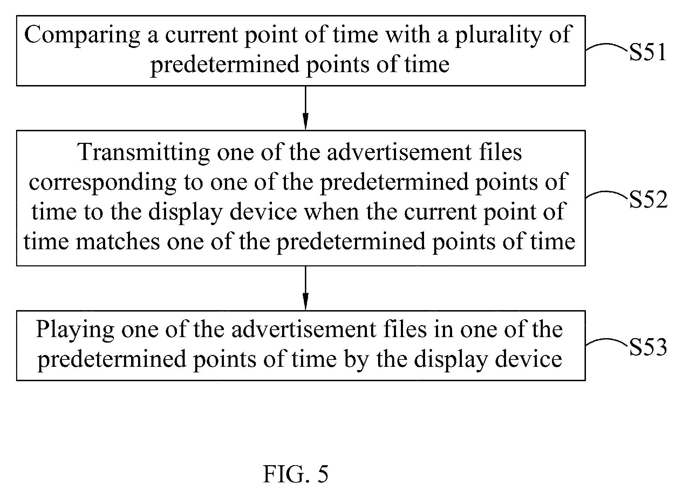

Please refer to FIG. 5 which is the third flow chart of a video extracting method of the present invention. As shown in the Fig., the cloud server includes a timer and a processor. The timer provides the processor with a current point of time. The processor includes a plurality of predetermined points of time, and each of the predetermined points of time corresponds to each of the advertisement files. The processor includes performing the following steps.

Step S51: Comparing a current point of time with a plurality of predetermined points of time.

Step S52: Transmitting one of the advertisement files corresponding to one of the predetermined points of time to the display device when the current point of time matches one of the predetermined points of time.

Step S53: Playing one of the advertisement files in one of the predetermined points of time by the display device.

Therefore, the display screen of the display device plays the advertisement file corresponding to the predetermined time point when the predetermined time point starts.

In conclusion, a video time extracting system and an extracting method thereof disclosed in the present invention are able to transmit the data of the advertisement time slots to the cloud server by the display device, and when the data of the advertisement time slots are received by the cloud server, the advertisement file corresponding to the advertisement time slot is selected to be transmitted to the display device, and then the display device plays the advertisement file accordingly. As a result, the objective of playing the advertisement file corresponding to the advertisement time slot in the advertisement time slot can be achieved.

While the means of specific embodiments in present invention has been described by reference drawings, numerous modifications and variations could be made thereto by those skilled in the art without departing from the scope and spirit of the invention set forth in the claims. The modifications and variations should in a range limited by the specification of the present invention.

## Claims

1. A video time extracting system (1), comprising:
a display device (11), connected to a multimedia output device (2) to obtain a plurality of video files, and comprising:
a display screen (111), playing the plurality of video files, and each pair of the plurality of video files having an advertisement time slot therebetween, and
a first transceiver (112), transmitting data of the advertisement time slots, and
a cloud server (12), connected to the display device (11), and comprising:
a database (121), storing a plurality of advertisement files,
a second transceiver (122), receiving the data of the advertisement time slots, and
a processor (123), connecting the database (121) with the second transceiver (122) to obtain the advertisement time slots,
wherein, the processor (123) selecting each of the advertisement files played in each of the advertisement time slots; wherein the processor (123) controls the second transceiver (122) to transmit one of the advertisement files corresponding to one of the advertisement time slots to the display device (11) in the advertisement time slot, and the display screen (111) plays the advertisement file accordingly.

2. The video time extracting system (1) of claim 1, wherein the display device (11) obtains a plurality of original advertisement files from the multimedia output device (2), and each of the original advertisement files is played in each of the advertisement time slots; one of the advertisement files corresponding to one of the advertisement time slots covers the original advertisement files in one of the advertisement time slots, and the display screen (111) plays the advertisement file accordingly.

3. The video time extracting system (1) of claim 1, wherein the processor (123) comprises a plurality of predetermined slots, each of the predetermined slots corresponding to each of the advertisement files, and the processor (123) compares the advertisement time slots with the plurality of predetermined slots; when one of the advertisement time slots matches one of the predetermined slots, the second transceiver (122) transmits one of the advertisement files corresponding to one of the predetermined slots to the display device (11), and the display screen (111) plays the advertisement file in the predetermined slot accordingly.

4. The video time extracting system (1) of claim 1, wherein the cloud server (12) further comprises a timer (124) providing the processor (123) with a current point of time, the processor (123) comprises a plurality of predetermined points of time, each of the predetermined points of time corresponding to each of the advertisement files, and the processor (123) compares the current point of time with the plurality of the predetermined points of time; when the current point of time matches one of the predetermined points of time, the second transceiver (122) transmits one of the advertisement files corresponding to one of the predetermined points of time to the display device (11), and the display screen (111) plays the advertisement file in the predetermined time point accordingly.

5. The video time extracting system (1) of claim 1, wherein an advertisement content of each of the advertisement files corresponding to a video content of each of the video files, and one of the advertisement files is played in one of the advertisement time slots when one of the video files is playing or after playing.

6. A video time extracting method, comprising the following steps of:
connecting a display device (11) with a multimedia output device (2) to obtain and play a plurality of video files, and transmitting data of advertisement time slots, each of the advertisement time slots is arranged between each pair of the video files;
disposing a cloud server (12) receiving and storing the data of the advertisement time slots from the display device (11);
selecting each of advertisement files played in each of the advertisement time slots; and
transmitting one of the advertisement files corresponding to one of the advertisement time slots to the display device (11) in one of the advertisement time slots, and playing the advertisement file by the display device (11).

7. The video time extracting method of claim 6, wherein the display device (11) obtains a plurality of original advertisement files from the multimedia output device (2), and each of the original advertisement files is played in each of the advertisement time slots; one of the advertisement files corresponding to one of the advertisement time slots covers one of the original advertisement files in one of the advertisement time slots, and the display screen (111) plays the advertisement file accordingly.

8. The video time extracting method of claim 6, wherein a processor (123) of the cloud server (12) comprises a plurality of predetermined slots, each of the predetermined slots corresponding to each of the advertisement files, and the processor (123) comprises the following steps of:
comparing the advertisement time slots with the plurality of predetermined slots;
transmitting one of the advertisement files corresponding to one of the predetermined slots to the display device (11) when one of the advertisement time slots matches one of the predetermined slots, and
playing one of the advertisement files in one of the predetermined slot by the display device (11).

9. The video time extracting method of claim 6, wherein the cloud server (12) comprises a timer (124) and a processor (123), the timer (124) provides the processor (123) with a current point of time, the processor (123) comprises a plurality of predetermined points of time, each of the predetermined points of time corresponding to each of the advertisement files, and the processor (123) comprises the following steps of:
comparing the current point of time with the plurality of the predetermined points of time;
transmitting one of the advertisement files corresponding to one of the predetermined points of time to the display device (11) when the current point of time matches one of the predetermined points of time, and
playing one of the advertisement files in one of the predetermined points of time by the display device (11).

10. The video time extracting method of claim 6, wherein an advertisement content of each of the advertisement files corresponds to a video content of each of the video files, and one of the advertisement files is played in one of the advertisement time slots when one of the video files is playing or after playing.
